(19)

Europäisches Patentamt
European Patent Office
Office européen des brevets

(11) **EP 2 744 136 A1**

(12) **EUROPEAN PATENT APPLICATION**
published in accordance with Art. 153(4) EPC

(43) Date of publication:
**18.06.2014 Bulletin 2014/25**

(51) Int Cl.:
**H04L 1/00** (2006.01)

(21) Application number: **11870937.7**

(22) Date of filing: **12.08.2011**

(86) International application number:
**PCT/CN2011/078324**

(87) International publication number:
**WO 2013/023336 (21.02.2013 Gazette 2013/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Fujitsu Limited**
**Kawasaki-shi, Kanagawa 211-8588 (JP)**

(72) Inventors:
• **WANG, Yi**
**Beijing 100025 (CN)**

• **ZHANG, Yuantao**
**Beijing 100025 (CN)**
• **ZHOU, Hua**
**Beijing 100025 (CN)**

(74) Representative: **Fenlon, Christine Lesley**
**Haseltine Lake LLP**
**Lincoln House, 5th Floor**
**300 High Holborn**
**London WC1V 7JH (GB)**

(54) **MAPPING RELATIONSHIP ESTABLISHMENT METHOD, CHANNEL QUALITY INFORMATION FEEDBACK METHOD AND DEVICE**

(57) Embodiments of the present invention provide a method and an apparatus for establishing a mapping relationship and a method and an apparatus for feeding back channel quality information. The methods are applicable to terminal equipment configured with a coordinated multiple-point feedback mode, the method for establishing a mapping relationship includes: determining, by terminal equipment, the number of bits for denoting differential channel quality information and mapping relationship between each of bit values of the differential channel quality information and an offset reference value according to a CoMP transmission mode, so as to feed back the differential channel quality information by using the mapping relationship; wherein in the mapping relationship, a plurality of offset reference values to which the bit values in an order from small to large correspond are a plurality of incremental integers. With the methods and apparatuses, reasonable CQI feedback is designed according to different improvements brought by different CoMP transmission technologies, thereby lowering overhead of feedback of CQI, and improving throughout of a user based on CoMP transmission.

201

determining, by terminal equipment, the number of bits for denoting the differential CQI and the mapping relationship between each of bit values of the differential CQI and an offset reference value according to a CoMP transmission mode, so as to feed back the differential CQI by using the mapping relationship; wherein in the mapping relationship, a plurality of offset reference values to which the bit values in an order from small to large correspond are a plurality of incremental integers

Fig. 2

**Description**

<u>Technical Field</u>

The present invention relates to a transmission technology in a radio communication system, and in particular to a method and an apparatus for establishing a mapping relationship and a method and an apparatus for feeding back channel quality information.

<u>Background</u>

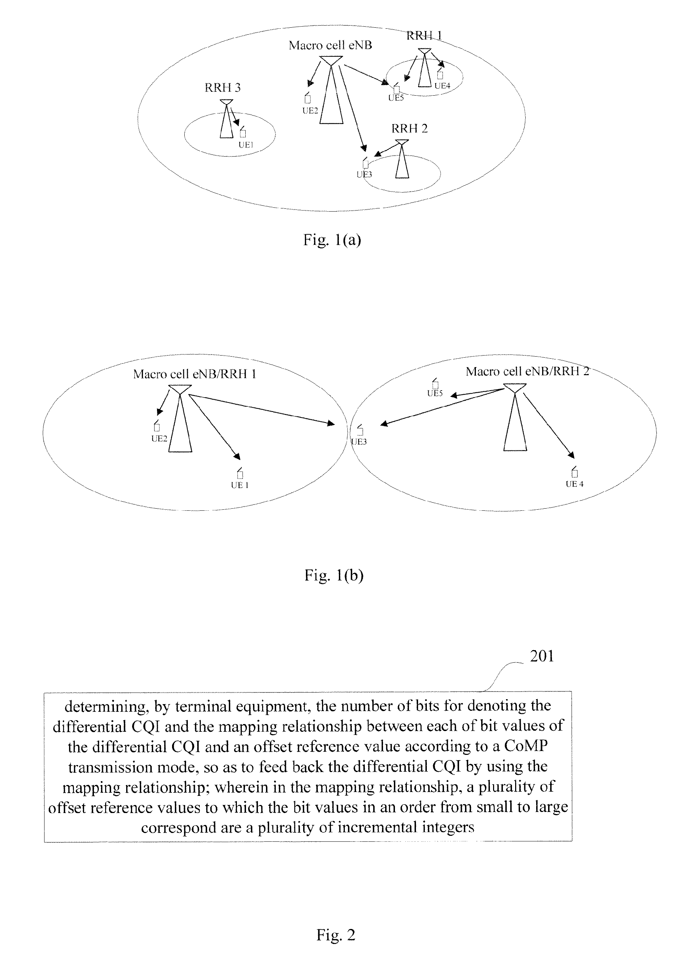

In a long term evolution-advance (LTE-A) system, in order to improve the throughput of cell-edge user equipment (UE), coordinated multiple-point (CoMP) transmission is of a great concern. Different transmission points in the same cell may coordinate in transmission, as shown in Fig. 1(a); and different transmission points in different cells may also coordinate in transmission, as shown in Fig. 1(b).

In order to select an optimal coordinated transmission point, a base station end needs to obtain information on downlink channels from each transmission point to UE, so as to select one or more optimal transmission points according to a certain optimization rule. The downlink channel information usually includes channel quality information (CQI), a precoding matrix index (PMI) and a rank. In order to ensure backward compatibility and more flexible scheduling, the base station end needs to possess ability of falling back to the single-point transmission in a traditional cellular network. This requires the UE to report not only downlink channel information in CoMP transmission, but also downlink channel information in traditional single-point transmission, in feeding back downlink channel information.

A CoMP technology may be classified into two types: multiple-point joint processing (JP) and multiple-point coordinated scheduling/beamforming (CS/CB). Feedback information of UE may not be completely identical according to different CoMP technologies, but needs to feed back CQI in traditional single-point (non-CoMP) transmission and CQI in CoMP transmission;

wherein, for JP transmission, a received signal may be expressed by formula (1):

$$\mathbf{y}_k = \left( \sum_{b=1}^{B} \mathbf{H}_k^{(b)} \mathbf{W}_k^{(b)} \right) \mathbf{x}_k + \mathbf{n}_k \qquad (1)$$

where, $\mathbf{W}_k^{(b)}$ is a precoding matrix used by a coordinated transmission point b in the JP transmission, $\mathbf{H}_k^{(b)}$ is a channel from the coordinated transmission point b to the UE, $\mathbf{x}_k$ is transmitted data, and $\mathbf{n}_k$ is a noise. The UE needs to respectively feed back the precoding matrix $\mathbf{W}_k^{(b)}$ of each transmission point, a precoding matrix based on a report, and a quantized signal to noise ratio to which formula (1) corresponds, i.e. CQI. And at the same time, the UE needs also to feed back CQI only in single-point transmission, i.e. a quantized signal to noise ratio to which formula (2) corresponds.

$$y_k = H_k^{(s)} W_k^{(s)} x_k + n_k \qquad (2)$$

According to what is defined in the LTE/LTE-advanced standard, if the UE feeds back the CQI in traditional single-point transmission aperiodically, for a first transport block (TB) and/or a second TB, the CQI is quantitatively expressed by 4 bits, as shown in Table 1; and if the UE feeds back the CQI in traditional single-point transmission periodically, for the first TB, the CQI is quantitatively expressed by 4 bits, as shown in Table 1, and for the second TB, it is quantitatively expressed by 3 bits; wherein, differential CQI relative to the first TB, i.e. an offset of the second TB, is a CQI index of the first TB subtracted by a CQI index of the second TB, as shown in Table 2; wherein, the numbers 0, 1, 2, 3, -4, -3, -2 and -1 in the offset level column in Table 2 are predefined offset reference values for comparing with calculated offsets; corresponding values of differential CQI may be obtained by comparing with the offset reference values in Table 2 through looking up Table 2 according to the calculated offsets. For example, according to Table 2, if a calculated offset is 4, a value of corresponding differential CQI is 3; if a calculated offset is 2, a value of corresponding differential CQI is 2; and if a calculated offset is -5, a value of corresponding differential CQI is 4, and so on.

Table 1

| CQI Indices | Modulation | Code rate× 1024 | efficiency |
|---|---|---|---|
| 0 | Out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Table 2

| spatial differential CQI value | Offsets level |
|---|---|
| 0 | 0 |
| 1 | 1 |
| 2 | 2 |
| 3 | ≥3 |
| 4 | ≤-4 |
| 5 | -3 |
| 6 | -2 |
| 7 | -1 |

However, it was found by the inventors in the implementation of the present invention that as in CoMP transmission, not only CQI in single-point transmission but also CQI in CoMP transmission need to be fed back, feedback overhead is obviously increased, and efficiency of a physical uplink control channel (PUCCH) or a physical uplink shared channel (PUSCH) is lowered. In order to efficiently transmit feedback information of UE by using a PUCCH/PUSCH, designing CQI feedback in CoMP transmission in view of characteristic of CoMP transmission is an issue urgent to be solved.

It should be noted that the above description of the background art is merely provided for clear and complete explanation of the present invention and for easy understanding by those skilled in the art. And it should not be understood that the above technical solution is known to those skilled in the art as it is described in the background art of the present invention.

Summary

The embodiments of the present invention provides a method and an apparatus for establishing a mapping relationship between differential CQI and an offset and a method and an apparatus for feeding back CQI in a CoMP system, so as to design a reasonable CQI feedback method and lower CQI feedback overhead in view of different improvements of properties for different CoMP transmission technologies, while increasing the throughput of UE based on CoMP transmission.

According to one aspect of the embodiments of the present invention, there is provided a method for establishing a mapping relationship between differential CQI and an offset, including:

determining, by terminal equipment, the number of bits for denoting the differential CQI and a mapping relationship between each of bit values of the differential CQI and an offset reference value according to a CoMP transmission mode, so as to feed back the differential CQI by using the mapping relationship;
wherein, a plurality of offset reference values to which the bit values in an order from small to large correspond are a plurality of incremental integers.

According to another aspect of the embodiments of the present invention, there is provided terminal equipment, including:

an establishing unit configured to determine the number of bits for denoting the differential CQI and mapping relationship between each of bit values of the differential CQI and an offset reference value according to a CoMP transmission mode, so as to feed back the differential CQI by using the mapping relationship; wherein a plurality of offset reference values to which the bit values in an order from small to large correspond are a plurality of incremental integers.

According to still another aspect of the embodiments of the present invention, there is provided a method for feeding back CQI, applicable to terminal equipment configured with a CoMP feedback mode, the method including:

a first calculating step: calculating CQI based on non-CoMP transmission and CQI based on CoMP transmission according to a downlink reference signal;
a second calculating step: calculating an offset of the CQI based on the CoMP transmission according to the CQI based on non-CoMP transmission and the CQI based on the CoMP transmission;
a determining step: determining differential CQI based on the CoMP transmission according to the offset of the CQI based on the CoMP transmission and pre-established mapping relationship between differential CQI and offset, wherein in the pre-established mapping relationship between differential CQI and offset, a plurality of offset reference values corresponding to the differential CQI in an order from small to large are a plurality of incremental integers; and
a feeding back step: feeding the CQI based on non-CoMP transmission and the differential CQI based on the CoMP transmission back to a base station.

According to further still another aspect of the embodiments of the present invention, there is provided terminal equipment configured with a CoMP feedback mode, the terminal equipment including:

a first calculating unit configured to calculate CQI based on non-CoMP transmission and CQI based on the CoMP transmission according to a downlink reference signal;
a second calculating unit configured to calculate an offset of the CQI based on the CoMP transmission according to the CQI based on non-CoMP transmission and the CQI based on the CoMP transmission calculated by the first calculating unit;
a determining unit configured to determine differential CQI based on the CoMP transmission according to the offset of the CQI based on the CoMP transmission calculated by the second calculating unit and pre-established mapping relationship between differential CQI and offset, wherein in the pre-established mapping relationship between differential CQI and offset, a plurality of offset reference values corresponding to the differential CQI in an order from small to large are a plurality of incremental integers; and
a feeding back unit configured to feed the CQI based on non-CoMP transmission calculated by the first calculating unit and the differential CQI based on the CoMP transmission determined by the determining unit back to a base station.

According to further still another aspect of the embodiments of the present invention, there is provided a computer-readable program, wherein when the program is executed in terminal equipment, the program enables a computer to carry out the method for establishing mapping relationship between differential CQI and an offset as described above in the terminal equipment.
According to further still another aspect of the embodiments of the present invention, there is provided a storage medium in which a computer-readable program is stored, wherein the computer-readable program enables a computer to carry out the method for establishing mapping relationship between differential channel quality information and an offset as described above in terminal equipment.

According to further still another aspect of the embodiments of the present invention, there is provided a computer-readable program, wherein when the program is executed in terminal equipment, the program enables a computer to carry out the method for feeding back channel quality information as described above in the terminal equipment.

According to further still another aspect of the embodiments of the present invention, there is provided a storage medium in which a computer-readable program is stored, wherein the computer-readable program enables a computer to carry out the method for feeding back channel quality information as described above in terminal equipment.

The advantage of the embodiments of the present invention resides in that a reasonable CQI feedback method is designed and CQI feedback overhead is lowered in view of different improvement of properties for different CoMP transmission technologies, thereby increasing the throughput of UE based on CoMP transmission.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment. In the drawings:

Figure 1(a) is a schematic diagram of CoMP in the same cell in a CoMP transmission scenario;
Figure 1(b) is a schematic diagram of CoMP in different cells in a CoMP transmission scenario;
Figure 2 is a flowchart of the method for establishing mapping relationship between differential CQI and an offset provided by an embodiment of the present invention;
Figure 3 is a schematic diagram of the structure of terminal equipment provided by an embodiment of the present invention;
Figure 4 is a flowchart of the method for feeding back CQI provided by an embodiment of the present invention; and
Figure 5 is a schematic diagram of the structure of another piece of terminal equipment provided by an embodiment of the present invention.

Detailed Description

Foregoing and other features of the embodiments of the present invention will become apparent with reference to the drawings and the following description. These embodiments are illustrative only and are not intended to limit the present invention. For easy understanding of the principle and embodiments of the present invention by those skilled in the art, the embodiments of the present invention shall be described taking CoMP transmission (including JP transmission and CS/CB transmission) of an LTE-advanced system as an example. However, it should be understood that the embodiments of the present invention are not limited thereto, and are applicable to other systems and other transmission modes related to CoMP transmission. Furthermore, in the following description, the related "base station" refers to a transmission point of CoMP transmission; for example, it may be an evolved Node B (eNB) in a common sense, and may also be a remote radio head (RRH). However, the present invention is not limited thereto.

Embodiment 1

Fig. 2 is a flowchart of the method for establishing a mapping relationship between differential CQI and an offset provided by an embodiment of the present invention. Referring to Fig. 2, the method includes:

step 201: determining, by terminal equipment, the number of bits for denoting the differential CQI and the mapping relationship between each of bit values of the differential CQI and an offset reference value according to a CoMP transmission mode, so as to feed back the differential CQI by using the mapping relationship;
wherein in the mapping relationship, a plurality of offset reference values to which the bit values in an order from small to large correspond are a plurality of incremental integers.

After determining the mapping relationship between the differential CQI and the offset by using the method of this embodiment, the terminal equipment may feedback the differential CQI by using the relationship. For example, in need of feeding back the differential CQI, the terminal equipment may compare an offset obtained through calculation with the offset reference values in the mapping relationship established in this embodiment, so as to determine and feedback corresponding differential CQI.
In an embodiment, the mapping relationship between the differential CQI and the offset may be stored in a form of a table, and the number of bits denoting the differential CQI may be 3 bits or 2 bits or others. Table 3 shows a mapping relationship between differential CQI of 3 bits and an offset, and Table 4 shows a mapping relationship between differential CQI of 2 bits and an offset.

Table 3

| Spatial differential CQI value | Offset level |
|---|---|
| 0 | $\leq M_1$ |
| 1 | $M_2$ |
| 2 | $M_3$ |
| 3 | $M_4$ |
| 4 | $M_5$ |
| 5 | $M_6$ |
| 6 | $M_7$ |
| 7 | $\geq M_8$ |

Table 4

| Spatial differential CQI value | Offset level |
|---|---|
| 0 | $\leq M_1$ |
| 1 | $M_2$ |
| 2 | $M_3$ |
| 3 | $\geq M_4$ |

As shown in tables 3 and 4, 0 (000)~7 (111) or 0 (00)~3(11) are bit values denoting the differential CQI, and $M_1 \sim M_8$ or $M_1 \sim M_4$ are offset reference values of the bit values corresponding to the differential CQI, and $M_1 < M_2 < ... < M_8$.
In this embodiment, preferably, the minimum value (for example, "0") in the bit values denoting the differential CQI corresponds to an offset level that less than or equal to the minimum value (for example, "$M_1$") in the offset reference values; and the maximum value (for example, "7" or "3") in the bit values denoting the differential CQI corresponds to an offset level that greater than or equal to the maximum value (for example, "$M_8$" or "$M_4$") in the offset reference values. However, this embodiment is not limited thereto, and the minimum value and the maximum value in the bit values denoting the differential CQI may respectively correspond to corresponding offset reference values according to different values of $M_1 \sim M_8$ or $M_1 \sim M_4$, but a certain intermediate bit value denoting the differential CQI corresponds to an offset level that less than or equal to or greater than or equal to a corresponding offset reference value. Taking Table 3 as an example, it is possible that 0 (000) corresponds to $M_1$, and 7 (111) corresponds to $M_8$, but 3 (011) corresponds to an offset level that less than or equal to $M_4$, or corresponds to an offset level that greater than or equal to $M_4$, i.e. $0 \rightarrow \leq M_1$, $7 \rightarrow \leq M_8$, $3 \rightarrow \leq M_4$ or $\geq M_4$.

In this embodiment, preferably, when the base station adopts different CoMP transmission modes, the terminal equipment may adopt the mapping relationship between differential CQI of different numbers of bits and an offset. For example, when the base station adopts a CoMP transmission mode of JP, the terminal equipment adopts the mapping relationship between differential CQI of 3 bits and an offset; and when the base station adopts a CoMP transmission mode of CS/CB, the terminal equipment adopts the mapping relationship between differential CQI of 2 bits and an offset.

In this embodiment, preferably, when the base station adopts different CoMP transmission modes, if the terminal equipment adopts the mapping relationship between differential CQI of identical numbers of bits and an offset, the terminal equipment may adopt different offset reference values. For example, the terminal equipment adopts a mapping relationship between differential CQI of 3 bits and an offset no matter what CoMP transmission mode (JP or CS/CB) is adopted by the base station, but the terminal equipment may adopt $M_1 \sim M_8$ as the offset reference values in its mapping relationship between differential CQI of 3 bits and an offset when a CoMP transmission mode of JP is adopted by the base station, and adopt $M_1' \sim M_8'$ as the offset reference values in its mapping relationship between differential CQI of 3 bits and an offset when a CoMP transmission mode of CS/CB is adopted by the base station; preferably, $M_8 \geq M_8'$.

In this embodiment, preferably, when the base station adopts a CoMP transmission mode of JP, the minimum value in the offset reference values in the mapping relationship between differential CQI and an offset used by the terminal equipment is 0 or 1 or 2; and when the base station adopts a CoMP transmission mode of CS/CB, the minimum value in the offset reference values in the mapping relationship between differential CQI and an offset used by the terminal equipment is -1 or 0.

Table 5 shows an example of the mapping relationship between differential CQI of 3 bits and an offset established by the terminal equipment by using the method of this embodiment when the base station adopts a CoMP transmission mode of JP, tables 6 and 7 show two examples of the mapping relationship between differential CQI of 3 bits and an offset established by the terminal equipment by using the method of this embodiment when the base station adopts a CoMP transmission mode of CS/CB, and tables 8 and 9 show two examples of the mapping relationship between differential CQI of 2 bits and an offset established by the terminal equipment by using the method of this embodiment when the base station adopts a CoMP transmission mode of CS/CB.

Table 5

| Spatial differential CQI value | Offset level |
|---|---|
| 0 | $\leq 2$ |
| 1 | 3 |
| 2 | 4 |
| 3 | 5 |
| 4 | 6 |
| 5 | 7 |
| 6 | 8 |
| 7 | $\geq 9$ |

Table 6

| Spatial differential CQI value | Offset level |
|---|---|
| 0 | $\leq -1$ |
| 1 | 0 |
| 2 | 1 |
| 3 | 2 |
| 4 | 3 |
| 5 | 4 |

(continued)

| Spatial differential CQI value | Offset level |
|---|---|
| 6 | 5 |
| 7 | $\geq 6$ |

Table 7

| Spatial differential CQI value | Offset level |
|---|---|
| 0 | $\leq 0$ |
| 1 | 1 |
| 2 | 2 |
| 3 | 3 |
| 4 | 4 |
| 5 | 5 |
| 6 | 6 |
| 7 | $\geq 7$ |

Table 8

| Spatial differential CQI value | Offset level |
|---|---|
| 0 | $\leq -1$ |
| 1 | 0 |
| 2 | 1 |
| 3 | $\geq 2$ |

Table 9

| Spatial differential CQI value | Offset level |
|---|---|
| 0 | $\leq 0$ |
| 1 | 1 |
| 2 | 2 |
| 3 | $\geq 3$ |

With the method of this embodiment, the terminal equipment may establish a different mapping relationship between differential CQI and an offset according to a CoMP transmission mode, and feed back differential CQI by using the mapping relationship in need of feeding back differential CQI, thereby lowering overhead of feedback of CQI, and improving throughout of UE based on CoMP transmission.

An embodiment of the present invention further provides terminal equipment, as described in Embodiment 2 below. As the principle of the terminal equipment for solving problem is similar to that of the method for establishing a mapping relationship between differential CQI and an offset based on terminal equipment in Embodiment 1, the implementation of the method may be referred to for the implementation of the terminal equipment, and the repeated parts shall not be described any further.

Embodiment 2

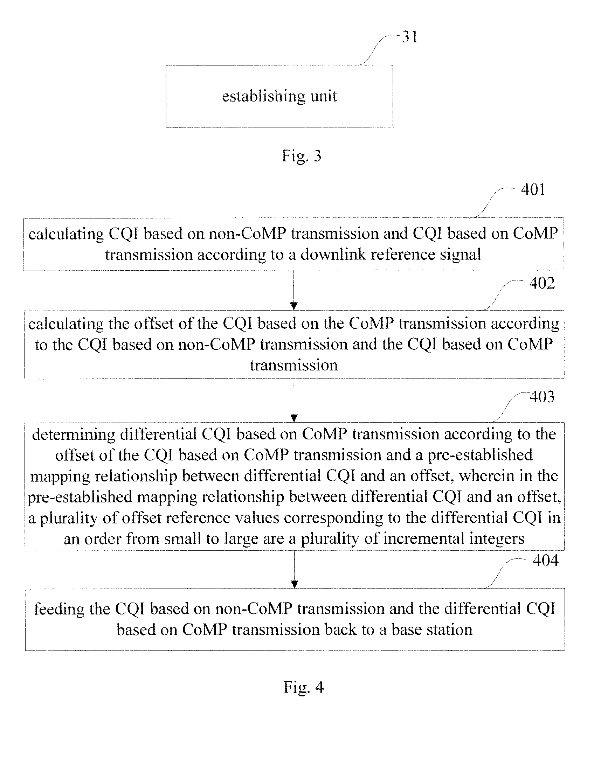

Fig. 3 is a schematic diagram of the structure of the terminal equipment provided by an embodiment of the present invention. Referring to Fig. 3, the terminal equipment includes:

an establishing unit 31 configured to determine the number of bits for denoting the differential CQI and a mapping relationship between each of bit values of the differential CQI and an offset reference value according to a CoMP transmission mode, so that the terminal equipment feeds back the differential CQI by using the mapping relationship; wherein a plurality of offset reference values to which the bit values in an order from small to large correspond are a plurality of incremental integers.

In an embodiment, in the mapping relationship between differential CQI and an offset established by the establishing unit 31, the minimum value in the bit values corresponds to an offset level that less than or equal to the minimum value in the offset reference values; and the maximum value in the bit values corresponds to an offset level that greater than or equal to the maximum value in the offset reference values. However, this embodiment is not limited thereto, and a certain intermediate value in the bit values may be greater than or equal to or less than or equal to a corresponding offset reference value.

In another embodiment, when the CoMP transmission modes adopted by the base station are different, the numbers of bits in the mapping relationship between differential CQI and an offset established by the establishing unit 31 are different, or the values of the plurality of offset reference values in the mapping relationship between differential CQI and an offset established by the establishing unit 31 are different.

In a further embodiment, when the CoMP transmission mode adopted by the base station is a JP transmission mode, the minimum value in the offset reference values in the mapping relationship between differential CQI and an offset established by the establishing unit 31 is 0, or 1, or 2; and when the CoMP transmission mode adopted by the base station is a CS/CB transmission mode, the minimum value in the offset reference values in the mapping relationship between differential CQI and an offset established by the establishing unit 31 is -1 or 0.

In a further embodiment, when the CoMP transmission mode adopted by the base station is a JP transmission mode, the maximum value in the offset reference values in the mapping relationship between differential CQI and an offset established by the establishing unit 31 is greater than the maximum value in the offset reference values in the mapping relationship between differential CQI and an offset established by the establishing unit 31 when the CoMP transmission mode adopted by the base station is a CS/CB transmission mode.

With the terminal equipment of this embodiment, the terminal equipment may establish a different mapping relationship between differential CQI and an offset according to a CoMP transmission mode, and feed back differential CQI by using the mapping relationship in need of feeding back differential CQI, thereby lowering overhead of feedback of CQI, and improving throughout of UE based on CoMP transmission.

Embodiment 3

Fig. 4 is a flowchart of the method for feeding back CQI, applicable to terminal equipment configured with a CoMP feedback mode, provided by an embodiment of the present invention. Referring to Fig. 4, the method includes:

a first calculating step 401: calculating CQI based on non-CoMP transmission and CQI based on CoMP transmission according to a downlink reference signal;
wherein, the downlink reference signal may be a cell-specific reference signal (CRS) and/or a channel state information-reference signal (CSI-RS), and may also be other downlink reference signals, and this embodiment is not limited thereto;
wherein, the CQI of each TB based on non-CoMP transmission and CQI of each TB based on CoMP transmission are respectively quantized signal to noise ratios to which respective formulas of received signals correspond, which may be obtained in manner of the relevant art, and shall not be described herein any further;
a second calculating step 402: calculating the offset of the CQI based on the CoMP transmission according to the CQI based on non-CoMP transmission and the CQI based on CoMP transmission;
a determining step 403: determining differential CQI based on CoMP transmission according to the offset of the CQI based on CoMP transmission and a pre-established mapping relationship between differential CQI and an offset, wherein in the pre-established mapping relationship between differential CQI and an offset, a plurality of offset reference values corresponding to the differential CQI in an order from small to large are a plurality of incremental integers;
wherein, the differential CQI based on CoMP transmission can be determined by comparing the calculated offset of the CQI based on CoMP transmission with the offset reference values in the pre-established mapping relationship between differential CQI and an offset;
a feeding back step 404: feeding the CQI based on non-CoMP transmission and the differential CQI based on CoMP transmission back to a base station.

In this embodiment, corresponding to different CoMP transmission modes, a different mapping relationship between differential CQI and an offset are pre-established, the mapping relationship showing corresponding relationship between differential CQI and offset reference values. When a CQI offset is determined through calculation, the differential CQI to which the CQI offset corresponds may be determined by comparing the CQI offset with the offset reference values in the pre-established mapping relationship;

wherein, Embodiment 1 may be referred to for the establishment of the mapping relationship, which is incorporated herein, and shall not be described herein any further.

In an embodiment, if the CQI offset based on CoMP transmission is less than or equal to the minimum value in the plurality of offset reference values, the differential CQI based on CoMP transmission is determined as the minimum value in the differential CQI in the pre-established mapping relationship between differential CQI and an offset; and if the CQI offset based on CoMP transmission is greater than or equal to the maximum value in the plurality of offset reference values, the differential CQI based on CoMP transmission is determined as the maximum value in the differential CQI in the pre-established mapping relationship between differential CQI and an offset.

In this embodiment, in the mapping relationship between differential CQI and an offset, the number of bits denoting the differential CQI may be 3 bits or 2 bits. And the mapping relationship between differential CQI and an offset may be denoted in a form of a table. As described above, Table 3 shows a mapping relationship between differential CQI of 3 bits and an offset, and Table 4 shows a mapping relationship between differential CQI of 2 bits and an offset.

In Table 3, $M_1$, $M_2$,..., $M_8$ are offset reference values, which are integers, and $M_1 < M_2 < ... < M_8$. In Table 4, $M_1$, $M_2$,..., $M_4$ are offset reference values, which are integers, and $M_1 < M_2 < ... < M_4$.

Preferably, when the base station adopts a CoMP transmission mode of JP, the minimum value in the offset reference values, i.e. $M_1$, may be 0, or 1, or 2. Table 5 shows a preferred example of a mapping table (i.e. a mapping relationship) between differential CQI of 3 bits and an offset pre-established in this embodiment when the base station adopts a CoMP transmission mode of JP.

Preferably, when the base station adopts a CoMP transmission mode of CS/CB, the minimum value in the offset reference values, i.e. $M_1$, may be -1 or 0. Tables 6 and 7 show preferred examples of the mapping relationship between differential CQI of 3 bits and an offset pre-established in this embodiment when the base station adopts a CoMP transmission mode of CS/CB, and tables 8 and 9 show preferred examples of the mapping relationship between differential CQI of 2 bits and an offset pre-established in this embodiment when the base station adopts a CoMP transmission mode of CS/CB.

In this embodiment, corresponding to different CoMP transmission modes, different mapping relationship between differential CQI and an offset may be pre-established in this embodiment. For example, a mapping relationship in which the numbers of bits are identical but the offset reference values are different may be pre-established, and the mapping relationship in which the numbers of bits are different may also be pre-established.

As to the pre-establishing mapping relationship in which the numbers of bits are identical but the offset reference values are different, the maximum values of the plurality of offset reference values in the mapping relationship are different. Preferably, the maximum value in the plurality of offset reference values when the base station adopts a CoMP transmission mode of JP is greater than or equal to the maximum value in the plurality of offset reference value when the base station adopts a CoMP transmission mode of CS/CB. For example, when the base station adopts a CoMP transmission mode of JP and a CoMP transmission mode of CS/CB, if the mapping relationship between differential CQI of 3 bits and an offset are selected, $M_8$ (JP)$\geq M_8$ (CS/CB).

As to the pre-establishing mapping relationship in which the numbers of bits are different, for example, when the base station adopts a CoMP transmission mode of JP, the mapping relationship between differential CQI of 3 bits and an offset may be pre-established first; and when the base station adopts a CoMP transmission mode of CS/CB, the mapping relationship between differential CQI of 2 bits and an offset may be pre-established first.

In this embodiment, for identical CoMP transmission modes of different ranks, a different mapping relationship may be pre-established first. For example, when the base station adopts a CoMP transmission mode of CS/CB, if rank=1, the mapping relationship between differential CQI and an offset as shown in Table 8 may be pre-established first by using the method of Embodiment 1; and if rank$\geq$2, the mapping relationship between differential CQI and an offset as shown in Table 9 may be pre-established first by using the method of Embodiment 1.

In this embodiment, the numbers of the TBs needing to feed back CQI are different as the ranks fed back by the terminal equipment are different.

When the rank fed back by the terminal equipment is 1, CQI based on CoMP transmission and CQI based on non-CoMP transmission of one TB only need to be fed back in step 401; thus, CQI based on CoMP transmission and CQI based on non-CoMP transmission of one TB only need to be calculated in step 401, and the offset of the CQI based on CoMP transmission calculated in step 402 is a difference between an index of the CQI based on CoMP transmission and an index of the CQI based on non-CoMP transmission.

When the rank fed back by the terminal equipment is greater than 2, differential CQI based on CoMP transmission and CQI based on non-CoMP transmission of two TBs need to be fed back in step 404; thus, CQI based on CoMP transmission and CQI based on non-CoMP transmission of two TBs need to be calculated in step 401, the offset of the CQI based on CoMP transmission of two TBs needs to be calculated in step 402, and the CQI based on non-CoMP transmission and the differential CQI based on CoMP transmission of two TBs need to be fed back in step 404. In an embodiment, a CQI offset based on CoMP transmission of each TB is a difference between an index of the CQI based on CoMP transmission of the TB and an index of the CQI based on non-CoMP transmission of the TB. In another embodiment, a CQI offset based on CoMP transmission of a first TB is a difference between an index of the CQI based on CoMP transmission of the first TB and an index of the CQI based on non-CoMP transmission of the first TB, and a CQI offset based on CoMP transmission of a second TB is a difference between an index of the CQI based on CoMP transmission of the first TB and an index of the CQI based on CoMP transmission of the second TB.

With the method for feeding back CQI by UE in a CoMP transmission scenario of the embodiment of the present invention, the terminal equipment estimates CQI of single point (non-CoMP) transmission and CQI of CoMP transmission according to a downlink reference signal, and feeds back quantized CQI to the base station according to a pre-established mapping relationship. The base station may dynamically schedule the single-point transmission or CoMP transmission to serve for UE according to the CQI fed back by the terminal equipment. A reasonable CQI feedback method is designed and CQI feedback overhead is lowered in view of different improvements of properties for different CoMP transmission technologies, thereby increasing the throughput of UE based on CoMP transmission.

An embodiment of the present invention further provides terminal equipment, as described in Embodiment 4 below. As the principle of the terminal equipment for solving problem is similar to that of the method for feeding back CQI based on terminal equipment in Embodiment 3, the implementation of the method may be referred to for the implementation of the terminal equipment, and the repeated parts shall not be described any further.

Embodiment 4

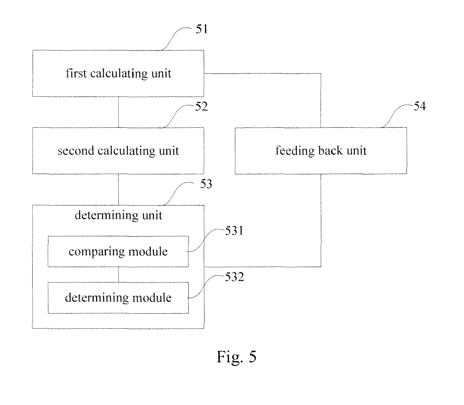

Fig. 5 is a schematic diagram of the structure of another piece of terminal equipment provided by an embodiment of the present invention, in which the terminal equipment is configured with a CoMP feedback mode. Referring to Fig. 5, the terminal equipment includes: a first calculating unit 51, a second calculating unit 52, a determining unit 53 and a feeding back unit 54; wherein,

the first calculating unit 51 is configured to calculate CQI based on non-CoMP transmission and CQI based on CoMP transmission according to a downlink reference signal;
the second calculating unit 52 is configured to calculate an offset of the CQI based on CoMP transmission according to the CQI based on non-CoMP transmission and the CQI based on CoMP transmission calculated by the first calculating unit 51;
the determining unit 53 is configured to determine differential CQI based on CoMP transmission according to the offset of the CQI based on CoMP transmission calculated by the second calculating unit 52 and a pre-established mapping relationship between differential CQI and an offset, wherein in the pre-established mapping relationship between differential CQI and an offset, a plurality of offset reference values corresponding to the differential CQI in an order from small to large are a plurality of incremental integers; and
the feeding back unit 54 is configured to feed the CQI based on non-CoMP transmission calculated by the first calculating unit 51 and the differential CQI based on CoMP transmission determined by the determining unit 33 back to a base station.

In an embodiment, the determining unit 53 includes: a comparing module 531 and a determining module 532; wherein,

the comparing module 531 is configured to compare the offset of the CQI based on CoMP transmission calculated by the second calculating unit 52 with the offset reference value in the pre-established mapping relationship between differential CQI and an offset, so as to determine the differential CQI corresponding to the offset of the CQI based on CoMP transmission.

In an embodiment, if a comparison result of the comparing module 531 is that the offset of the CQI based on CoMP transmission is less than or equal to the minimum value in the plurality of offset reference values, the determining module 532 determines the differential CQI based on CoMP transmission as the minimum value of the differential CQI in the pre-established mapping relationship between differential CQI and an offset; and if a comparison result of the comparing module 531 is that the offset of the CQI based on CoMP transmission is greater than or equal to the maximum value in the plurality of offset reference values, the determining module 532 determines the differential CQI based on CoMP transmission as the maximum value of the differential CQI in the pre-established mapping relationship between differential CQI and an offset. What is described above is an example only, and this embodiment is not limited thereto. If an intermediate value in the values of bits denoting the differential CQI in the mapping relationship is greater than or equal to or less than or equal to a corresponding offset reference value, the comparison needs to be performed according to a corresponding numerical value.

In an embodiment, in the mapping relationship between the differential CQI and the offset, the number of the bits for denoting the differential CQI is 3. And in another embodiment, in the mapping relationship between the differential CQI and the offset, the number of the bits for denoting the differential CQI is 2.

In an embodiment, corresponding to different CoMP transmission modes, the offset reference values in the mapping relationship between differential CQI and an offset pre-established by the terminal equipment are different, or the numbers of the bits for denoting the differential CQI in the mapping relationship between differential CQI and an offset pre-established by the terminal equipment are different.

In an embodiment, when the base station adopts a CoMP transmission mode of multiple points JP, in the mapping relationship between differential CQI and an offset pre-established by the terminal equipment, the minimum value in the plurality of offset reference values is 0, or 1, or 2; and in another embodiment, when the base station adopts a CoMP transmission mode of CS/CB, in the mapping relationship between differential CQI and an offset pre-established by the terminal equipment, the minimum value in the offset reference values is -1 or 0.

In an embodiment, when the base station adopts a CoMP transmission mode of multiple points JP, in the mapping relationship between differential CQI and an offset pre-established by the terminal equipment, the maximum value in the plurality of offset reference values is greater than or equal to the maximum value in the plurality of offset reference values in the mapping relationship between differential CQI and an offset pre-established by the terminal equipment when the base station adopts a CoMP transmission mode of CS/CB.

In an embodiment, when the rank fed back by the terminal equipment is 1, the offset of the CQI based on CoMP transmission calculated by the second calculating unit 52 is the difference between an index of the CQI based on CoMP transmission and an index of the CQI based on non-CoMP transmission.

In an embodiment, when the rank fed back by the terminal equipment is greater than or equal to 2, the first calculating unit 51 calculates the CQI based on non-CoMP transmission and the CQI based on CoMP transmission of two TBs; and the second calculating unit 52 calculates the offsets of the CQI based on CoMP transmission of two TBs; wherein the offset of the CQI based on CoMP transmission of each TB is the difference between an index of the CQI based on CoMP transmission of this TB and an index of the CQI based on non-CoMP transmission of this TB; and the feeding back unit 54 feeds back the CQI based on non-CoMP transmission and the differential CQI based on CoMP transmission of the two TBs.

In another embodiment, when the rank fed back by the terminal equipment is greater than or equal to 2, the first calculating unit 51 calculates the CQI based on non-CoMP transmission and the CQI based on CoMP transmission of two TBs; the second calculating unit 52 calculates the offsets of the CQI based on CoMP transmission of the two TBs; wherein the offset of the CQI based on CoMP transmission of the first TB is the difference between an index of the CQI based on CoMP transmission of the first TB and an index of the CQI based on non-CoMP transmission of the first TB, and the offset of the CQI based on CoMP transmission of the second TB is the difference between an index of the CQI based on CoMP transmission of the first TB and an index of the CQI based on CoMP transmission of the second TB; and the feeding back unit 54 feeds back the differential CQI based on CoMP transmission of the two TBs and the CQI based on non-CoMP transmission of the two TBs.

A reasonable CQI feedback method is designed by the terminal equipment of the embodiment of the present invention according to different improvements brought by different CoMP transmission technologies, thereby lowering overhead of feedback of CQI, and improving throughout of UE based on CoMP transmission.

An embodiment of the present invention further provides a computer-readable program, wherein when the program is executed in terminal equipment, the program enables a computer to carry out the method for establishing a mapping relationship between differential CQI and an offset as described in Embodiment 1 in the terminal equipment.

An embodiment of the present invention further provides a storage medium in which a computer-readable program is stored, wherein the computer-readable program enables a computer to carry out the method for establishing a mapping relationship between differential CQI and an offset as described in Embodiment 1 in terminal equipment.

An embodiment of the present invention further provides a computer-readable program, wherein when the program is executed in terminal equipment, the program enables a computer to carry out the method for feeding back CQI as described in Embodiment 3 in the terminal equipment.

An embodiment of the present invention further provides a storage medium in which a computer-readable program is stored, wherein the computer-readable program enables a computer to carry out the method for feeding back CQI as described in Embodiment 3 in terminal equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

**Claims**

1. A method for establishing a mapping relationship between differential channel quality information (CQI) and an offset, including:

    determining, by terminal equipment, the number of bits for denoting differential CQI and the mapping relationship between each of bit values of the differential CQI and an offset reference value according to a coordinated multiple-point (CoMP) transmission mode, so as to feed back the differential CQI by using the mapping relationship;
    wherein in the mapping relationship, a plurality of offset reference values to which the bit values in an order from small to large correspond are a plurality of incremental integers.

2. The method according to claim 1, wherein for different CoMP transmission modes, the numbers of bits are different, or the values of the plurality of offset reference values are different.

3. The method according to claim 2, wherein when the CoMP transmission mode is a multiple-point joint processing (JP) transmission mode, the minimum value in the offset reference values is 0, or 1, or 2; and when the CoMP transmission mode is a multiple point coordinated scheduling or beamforming (CS/CB) transmission mode, the minimum value in the offset reference values is -1 or 0.

4. The method according to claim 2, wherein the maximum value in the offset reference values when the CoMP transmission mode is a multiple point JP transmission mode is greater than the maximum value in the offset reference values when the CoMP transmission mode is a multiple-point CS/CB transmission mode.

5. Terminal equipment, including:

    an establishing unit configured to determine the number of bits for denoting differential CQI and a mapping relationship between each of bit values of the differential CQI and an offset reference value according to a CoMP transmission mode, so as to feed back the differential CQI by using the mapping relationship; wherein a plurality of offset reference values to which the bit values in an order from small to large correspond are a plurality of incremental integers.

6. The terminal equipment according to claim 5, wherein for different CoMP transmission modes, the numbers of bits are different, or the values of the plurality of offset reference values are different.

7. The terminal equipment according to claim 6, wherein when the CoMP transmission mode is a multiple-point JP transmission mode, the minimum value in the offset reference values is 0, or 1, or 2; and when the CoMP transmission mode is a multiple-point CS/CB transmission mode, the minimum value in the offset reference values is -1 or 0.

8. The terminal equipment according to claim 6, wherein the maximum value in the offset reference values when the CoMP transmission mode is a multiple-point jp transmission mode is greater than the maximum value in the offset reference values when the CoMP transmission mode is a multiple-point CS/CB transmission mode.

9. A method for feeding back channel quality information (CQI), applicable to terminal equipment configured with a coordinated multiple-point (CoMP) feedback mode, the method including:

    a first calculating step: calculating CQI based on non-CoMP transmission and CQI based on CoMP transmission according to a downlink reference signal;

a second calculating step: calculating the offset of the CQI based on CoMP transmission according to the CQI based on non-CoMP transmission and the CQI based on CoMP transmission;

a determining step: determining differential CQI based on CoMP transmission according to the offset of the CQI based on CoMP transmission and a pre-established mapping relationship between differential CQI and an offset, wherein in the pre-established mapping relationship between differential CQI and an offset, a plurality of offset reference values corresponding to the differential CQI in an order from small to large are a plurality of incremental integers; and

a feeding back step: feeding the CQI based on non-CoMP transmission and the differential CQI based on CoMP transmission back to a base station.

10. The method according to claim 9, wherein the determining step includes:

comparing the offset of the CQI based on CoMP transmission with the offset reference value in the pre-established mapping relationship between differential CQI and an offset, so as to determine the differential CQI corresponding to the offset of the CQI based on CoMP transmission.

11. The method according to claim 9, wherein in the pre-established mapping relationship between the differential CQI and the offset, the number of the bits for denoting the differential CQI is 3 or 2.

12. The method according to claim 9, wherein for different CoMP transmission modes, the values of a plurality of offset reference values in the pre-established mapping relationship between differential CQI and an offset are different, or the numbers of bits for denoting the differential CQI in the pre-established mapping relationship between differential CQI and an offset are different.

13. The method according to claim 9, wherein the maximum value in the offset reference values when the base station adopts a multiple-point JP transmission mode is greater than or equal to the maximum value in the offset reference values when the base station adopts a multiple-point CS/CB transmission mode.

14. The method according to claim 9, wherein
when the base station adopts a multiple-point JP transmission mode, the minimum value in the offset reference values is 0, or 1, or 2; and
when the base station adopts a multiple-point CS/CB transmission mode, the minimum value in the offset reference values is -1 or 0.

15. The method according to claim 9, wherein when the rank fed back by the terminal equipment is 1, in the second calculating step, the offset of the CQI based on CoMP transmission is the difference between an index of the CQI based on CoMP transmission and an index of the CQI based on non-CoMP transmission.

16. The method according to claim 9, wherein when the rank fed back by the terminal equipment is greater than 2,
in the first calculating step, calculating the CQI based on non-CoMP transmission and the CQI based on CoMP transmission of two transport blocks;
in the second calculating step, calculating the offsets of the CQI based on CoMP transmission of two transport blocks; wherein the offset of the CQI based on CoMP transmission of each transport block is the difference between an index of the CQI based on CoMP transmission of this transport block and an index of the CQI based on non-CoMP transmission of this transport block; and
in the feeding back step, feeding back by the terminal equipment the CQI based on non-CoMP transmission and the differential CQI based on CoMP transmission of the two transport blocks.

17. The method according to claim 9, wherein when the rank fed back by the terminal equipment is greater than or equal to 2,
in the first calculating step, calculating the CQI based on non-CoMP transmission and the CQI based on CoMP transmission of two transport blocks;
in the second calculating step, calculating the offsets of the CQI based on the CoMP transmission of the two transport blocks; wherein the offset of the CQI based on CoMP transmission of the first transport block is the difference between an index of the CQI based on CoMP transmission of the first transport block and an index of the CQI based on non-CoMP transmission of the first transport block, and the offset of the CQI based on CoMP transmission of the second transport block is the difference between an index of the CQI based on CoMP transmission of the first transport block and an index of the CQI based on CoMP transmission of the second transport block; and

in the feeding back step, feeding back by the terminal equipment the differential CQI based on CoMP transmission of the two transport blocks and the CQI based on non-CoMP transmission of the two transport blocks.

18. Terminal equipment configured with a coordinated multiple-point (CoMP) feedback mode, the terminal equipment including:

a first calculating unit configured to calculate CQI based on non-CoMP transmission and CQI based on CoMP transmission according to a downlink reference signal;
a second calculating unit configured to calculate an offset of the CQI based on CoMP transmission according to the CQI based on non-CoMP transmission and the CQI based on CoMP transmission calculated by the first calculating unit;
a determining unit configured to determine differential CQI based on CoMP transmission according to the offset of the CQI based on CoMP transmission calculated by the second calculating unit and a pre-established mapping relationship between differential CQI and an offset, wherein in the pre-established mapping relationship between differential CQI and an offset, a plurality of offset reference values corresponding to the differential CQI in an order from small to large are a plurality of incremental integers; and
a feeding back unit configured to feed the CQI based on non-CoMP transmission calculated by the first calculating unit and the differential CQI based on CoMP transmission determined by the determining unit back to a base station.

19. The terminal equipment according to claim 18, wherein the determining unit includes:

a comparing module configured to compare the offset of the CQI based on CoMP transmission calculated by the second calculating unit with the offset reference value in the pre-established mapping relationship between differential CQI and an offset, so as to determine the differential CQI corresponding to the offset of the CQI based on CoMP transmission.

20. The terminal equipment according to claim 18, wherein in the pre-established mapping relationship between differential CQI and an offset of the terminal equipment, the number of the bits for denoting the differential CQI is 3 or 2.

21. The terminal equipment according to claim 18, wherein the terminal equipment, in accordance with different CoMP transmission modes, adopts the pre-established mapping relationship between differential CQI and an offset with a plurality of offset reference values different, or adopts the pre-established mapping relationship between differential CQI and an offset with numbers of bits different.

22. The terminal equipment according to claim 18, wherein the maximum value in the plurality of offset reference values, in the pre-established mapping relationship between differential CQI and an offset of the terminal equipment, when the base station adopts a multiple-point JP transmission mode, is greater than or equal to the maximum value in the plurality of offset reference values, in the pre-established mapping relationship between differential CQI and an offset of the terminal equipment, when the base station adopts a multiple-point CS/CB transmission mode.

23. The terminal equipment according to claim 18, wherein
when the base station adopts a multiple-point JP transmission mode, in the pre-established mapping relationship between differential CQI and an offset of the terminal equipment, the minimum value in the plurality of offset reference values is 0, or 1, or 2; and
when the base station adopts a multiple-point CS/CB transmission mode, in the pre-established mapping relationship between differential CQI and an offset of the terminal equipment, the minimum value in the plurality of offset reference values is -1 or 0.

24. The terminal equipment according to claim 18, wherein when the rank fed back by the terminal equipment is 1, the offset of the CQI based on CoMP transmission calculated by the second calculating unit is the difference between an index of the CQI based on CoMP transmission and an index of the CQI based on non-CoMP transmission.

25. The terminal equipment according to claim 18, wherein when the rank fed back by the terminal equipment is greater than or equal to 2,
the first calculating unit calculates the CQI based on non-CoMP transmission and the CQI based on CoMP transmission of two transport blocks; the second calculating unit calculates the offsets of the CQI based on CoMP transmission of two transport blocks; wherein the offset of the CQI based on CoMP transmission of each transport block is the difference between an index of the CQI based on CoMP transmission of this transport block and the index of the CQI based on non-CoMP transmission of this transport block; and the feeding back unit feeds back the CQI based on non-CoMP transmission and the differential CQI based on CoMP transmission of the two transport blocks.

26. The terminal equipment according to claim 18, wherein when the rank fed back by the terminal equipment is greater than or equal to 2, the first calculating unit calculates the CQI based on non-CoMP transmission and the CQI based on CoMP transmission of two transport blocks; the second calculating unit calculates the offsets of the CQI based on CoMP transmission of the two transport blocks; wherein the offset of the CQI based on CoMP transmission of the first transport block is the difference between an index of the CQI based on CoMP transmission of the first transport block and an index of the CQI based on non-CoMP transmission of the first transport block, and the offset of the CQI based on CoMP transmission of the second transport block is the difference between an index of the CQI based on CoMP transmission of the first transport block and an index of the CQI based on CoMP transmission of the second transport block; and the feeding back unit feeds back the differential CQI based on CoMP transmission of the two transport blocks and the CQI based on non-CoMP transmission of the two transport blocks.

27. A computer-readable program, wherein when the program is executed in terminal equipment, the program enables a computer to carry out the method for establishing a mapping relationship between differential channel quality information and an offset as claimed in any one of claims 1-4 in the terminal equipment.

28. A storage medium in which a computer-readable program is stored, wherein the computer-readable program enables a computer to carry out the method for establishing a mapping relationship between differential channel quality information and an offset as claimed in any one of claims 1-4 in terminal equipment.

29. A computer-readable program, wherein when the program is executed in terminal equipment, the program enables a computer to carry out the method for feeding back channel quality information as claimed in any one of claims 9-17 in the terminal equipment.

30. A storage medium in which a computer-readable program is stored, wherein the computer-readable program enables a computer to carry out the method for feeding back channel quality information as claimed in any one of claims 9-17 in terminal equipment.

Fig. 1(a)

Fig. 1(b)

201

determining, by terminal equipment, the number of bits for denoting the differential CQI and the mapping relationship between each of bit values of the differential CQI and an offset reference value according to a CoMP transmission mode, so as to feed back the differential CQI by using the mapping relationship; wherein in the mapping relationship, a plurality of offset reference values to which the bit values in an order from small to large correspond are a plurality of incremental integers

Fig. 2

31

┌─────────────────────────────────────────┐
│                                          │
│            establishing unit             │
│                                          │
└─────────────────────────────────────────┘

Fig. 3

401

┌─────────────────────────────────────────────────────────────────────┐
│ calculating CQI based on non-CoMP transmission and CQI based on CoMP  │
│      transmission according to a downlink reference signal            │
└─────────────────────────────────────────────────────────────────────┘

402

┌─────────────────────────────────────────────────────────────────────┐
│ calculating the offset of the CQI based on the CoMP transmission according │
│  to the CQI based on non-CoMP transmission and the CQI based on CoMP  │
│                            transmission                              │
└─────────────────────────────────────────────────────────────────────┘

403

┌─────────────────────────────────────────────────────────────────────┐
│  determining differential CQI based on CoMP transmission according to the │
│       offset of the CQI based on CoMP transmission and a pre-established │
│  mapping relationship between differential CQI and an offset, wherein in the │
│ pre-established mapping relationship between differential CQI and an offset, │
│ a plurality of offset reference values corresponding to the differential CQI in │
│     an order from small to large are a plurality of incremental integers │
└─────────────────────────────────────────────────────────────────────┘

404

┌─────────────────────────────────────────────────────────────────────┐
│ feeding the CQI based on non-CoMP transmission and the differential CQI │
│        based on CoMP transmission back to a base station              │
└─────────────────────────────────────────────────────────────────────┘

Fig. 4

first calculating unit — 51

second calculating unit — 52

feeding back unit — 54

determining unit — 53

comparing module — 531

determining module — 532

Fig. 5

# INTERNATIONAL SEARCH REPORT

| | International application No. |
|---|---|
| | **PCT/CN2011/078324** |

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

IPC: H04L; H04Q; H04B

Documentation searched other than minimum documentation to the extent that such documents are included in the fields searched

Electronic data base consulted during the international search (name of data base and, where practicable, search terms used)

CNABS, CNTXT, CNKI: coordinated multi-point, channel quality, CQI, differential, offset

VEN, WOTXT: coordinate, multi? point, CoMP, channel quality, CQI, differential, offset

**C. DOCUMENTS CONSIDERED TO BE RELEVANT**

| Category* | Citation of document, with indication, where appropriate, of the relevant passages | Relevant to claim No. |
|---|---|---|
| X | WO 2010129593 A1 (QUALCOMM INCORPORATED), 11 November 2010 (11.11.2010), description, paragraphs 62-69, and figures 5-7 | 1-30 |
| A | CN 101841386 A (ZTE CORP.), 22 September 2010 (22.09.2010), the whole document | 1-30 |
| A | CN 101868925 A (SAMSUNG ELECTRONICS CO., LTD.), 20 October 2010 (20.10.2010), the whole document | 1-30 |

☐ Further documents are listed in the continuation of Box C.        ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 April 2012 (28.04.2012) | **17 May 2012 (17.05.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CAI, Ruxin** Telephone No.: (86-10) **62412016** |
|---|---|

Form PCT/ISA/210 (second sheet) (July 2009)

## INTERNATIONAL SEARCH REPORT
### Information on patent family members

International application No.

**PCT/CN2011/078324**

| Patent Documents referred in the Report | Publication Date | Patent Family | Publication Date |
|---|---|---|---|
| WO 2010129593 A1 | 11.11.2010 | US 2010278058 A1 | 04.11.2010 |
| | | KR 20120005048 A | 13.01.2012 |
| | | EP 2427979 A1 | 14.03.2012 |
| CN 101841386 A | 22.09.2010 | WO 2010105486 A1 | 23.09.2010 |
| | | EP 2410696 A1 | 25.01.2012 |
| | | US 20120051250 A1 | 01.03.2012 |
| CN 101868925 A | 20.10.2010 | US 7983223 B2 | 19.07.2011 |
| | | WO 2009066915 A1 | 28.05.2009 |
| | | JP 2011504040 A | 27.01.2011 |
| | | EP 2220791 A1 | 25.08.2010 |
| | | KR 20090051998 A | 25.05.2009 |
| | | US 2009129284 A1 | 21.05.2009 |

Form PCT/ISA/210 (patent family annex) (July 2009)